# EUROPEAN PATENT SPECIFICATION

(11) **EP 2 696 100 B1**
(45) Date of publication and mention of the grant of the patent: **25.09.2019**
(21) Application number: 12768414.0
(22) Date of filing: 04.04.2012
(51) Int. Cl.: F16F 15/08, F16F 1/36, F16F 1/38, F16F 1/373

(54) **ANTI-VIBRATION DEVICE**
VIBRATIONSSCHUTZVORRICHTUNG
DISPOSITIF ANTIVIBRATOIRE

(30) Priority: 05.04.2011 JP 2011083289
(43) Date of publication of application: 12.02.2014
(73) Proprietor: Bridgestone Corporation, Tokyo 104-8340 (JP)
(72) Inventor: SATOU, Shunji, Yokohama-shi Kanagawa 244-8510 (JP)
(74) Representative: Oxley, Robin John George
(86) International application number: PCT/JP2012/002372
(87) International publication number: WO 2012/137504

(56) References cited:
- WO-A1-2010/041749
- CN-A- 101 520 076
- DE-A1- 1 425 047
- FR-A1- 2 442 732
- GB-A- 762 539
- GB-A- 1 289 746
- JP-A- 1 105 030
- JP-A- 7 012 162
- JP-A- 8 226 491
- JP-A- 9 096 340
- JP-A- 9 273 579
- JP-A- H0 996 340
- JP-A- H08 226 491
- JP-A- 2002 115 744
- JP-A- 2006 207 703
- JP-A- 2006 207 704
- JP-A- 2006 207 704
- JP-A- 2008 019 992
- JP-A- 2010 138 935
- JP-U- H0 596 580
- JP-Y1- 32 000 708
- US-A- 3 243 240
- US-B1- 6 485 370

## Description

### TECHNICAL FIELD

The present invention relates to an anti-vibration device having a tubular rubber body, a support plate attached to an end face on one end of the tubular rubber body, and an inner tube fixedly arranged in the rubber body on the one end. The anti-vibration device is suitable for use as a cabin mount disposed, in conjunction with a paired tubular elastic body, in a vehicle. In particular, the present invention proposes a technique to exhibit different spring characteristics in response to input forces in directions perpendicular to the axial direction of the anti-vibration device without sacrificing durability of the anti-vibration device.

### RELATED ART

Patent Document 1 discloses this kind of an anti-vibration device which is arranged, for example, between a bottom wall of a vehicle cabin and a frame of the vehicle body; vertically holds the frame of the vehicle body in conjunction with the paired tubular elastic body arranged on a under face of the frame of the vehicle body; integrally clamps the frame of the vehicle body with a bolt passing through the inside of the tubular elastic bodies in an integral manner to be installed on the vehicle. The device is subjected to an elastic support of the vehicle cabin onto the frame of the vehicle body.

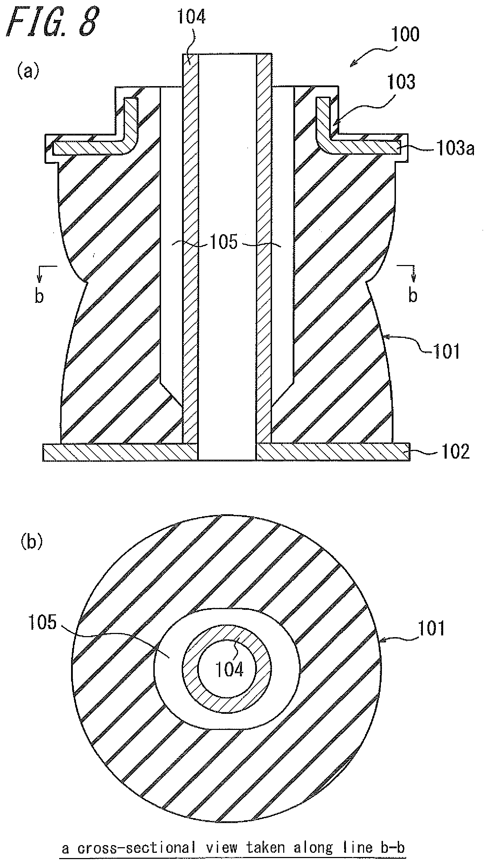

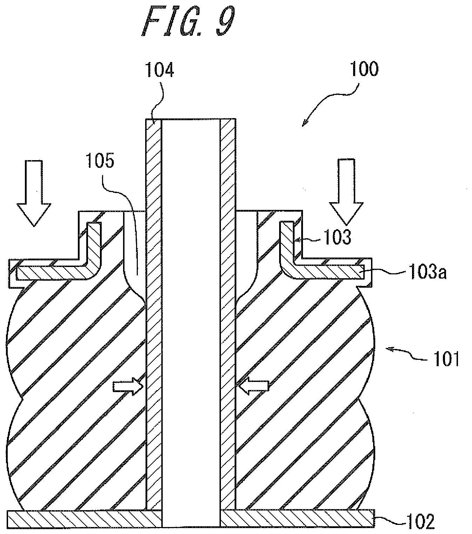

Fig. 8 illustrates vertical and horizontal cross-sectional views of an example of such anti-vibration devices which has a tubular rubber body 101, a support plate 102 attached to one end face at one end (in the figure, the lower end) of the rubber body 101, an outer tube 103 embedded in the other end (in the figure, the upper end) of the rubber body 101 and having an annular flange 103a extending outward around the periphery of the one end, and an inner tube 104 arranged in the rubber body 101. In the device 100, a cavity 105 is formed between the inner circumferential surface of the rubber body 101 except an area on the one end and the outer circumferential surface of the inner tube 104 over the entire circumference. When the device 100 is used and the rubber body 101 is compressed and deformed in the axial direction as illustrated in Fig. 9, the majority of the rubber body 101 deforms into the cavity 105 between the rubber body 101 and the inner tube 104 as indicated by the smaller arrows to suppress large protruding deformation of the outer surface of the rubber body 101 in a lateral direction. Attention is drawn to the disclosures of GB 762,539 and GB 1,289,746.

Patent Document 1: Japanese Utility Model Application Laid-open Publication No. S58-161769

### SUMMARY OF THE INVENTION

A device according to the present invention is provided as claimed in claim 1. Meanwhile, depending on a vehicle to which the above anti-vibration device is installed, the device may be required to exhibit different spring characteristics with respect to directions perpendicular to the axial direction of the anti-vibration device, for example, the front-back direction and the lateral direction of the vehicle. In order to fulfill the requirement, the conventional anti-vibration device 100 illustrated in Fig. 8 has an inner circumferential surface of the rubber body 101 of which a certain area in a circumferential direction protrudes toward the inner tube 104 along its entire length in the axial direction to abut the area of the inner circumferential surface of the rubber body against the inner tube, thereby exhibiting, in instant response to an application of a load, adequately high spring characteristics in a certain direction perpendicular to the axial direction of the device. However, the cavity 105 accepting the inward deformation of the rubber body 101 is smaller than the compressive deformation of the rubber body 101 under the action of the load in the axial direction or the like. As a result, the rubber body 101 largely protrudes and deforms in the lateral direction to increase the tensile stress of the rubber body 101 at the outer surface having a large surface area. Accordingly, the durability of the rubber body 101 and thus the anti-vibration device 100 is likely to deteriorate.

The present invention is to address the above problem faced by the conventional techniques. The purpose of the present invention is to provide an anti-vibration device which exhibits different spring characteristics with respect to different directions perpendicular to the axial direction of the anti-vibration device without sacrificing durability of the anti-vibration device caused by the large protruding deformation of the rubber body in the lateral direction.

An anti-vibration device according to the present invention comprises: a tubular rubber body; a support plate attached to an end face at one end of the tubular rubber body; and an inner tube fixedly arranged in the rubber body at the one end so as to form a cavity between the inner circumferential surface of the rubber body except an area at the one end and the outer circumferential surface of the inner tube over the entire circumference, wherein a protrusion protruding from the inner circumferential surface of the tubular rubber body to abut against or be located close to the inner tube is provided partially in the circumferential direction of the rubber body on the inner circumferential surface at the other end of the rubber body; an outer tube is arranged so as to surround a portion of the rubber body at the other end; and the protrusion extends over an axial region of the rubber body where the outer tube is arranged. It is noted that, in the present invention, the protrusion can be provided at an axial region of the rubber body larger than the axial region where the outer tube is arranged, but the length of the protrusion extending in the axial direction of the rubber body is equal to or less than four times the axial length of the outer tube.

Preferably, the outer tube comprises an annular plate and a supporting portion parallel to the axis of the inner tube and extending continuously from an inner circumferential edge of the annular plate to the other end of the rubber body; the outer tube is embedded in the other end of the rubber body; the supporting portion is arranged only on an outer side of the protrusion provided partially in the circumferential direction of the rubber body on the inner circumferential surface of the rubber body; and, in a cross-sectional view including the outer tube and perpendicular to the axial direction of the rubber body, an outline of the cavity has an ellipse shape and a pair of the protrusions and a pair of the supporting portions are arranged along the portion of the elliptical cavity with long radius. It is preferable that the protrusion formed on the inner circumferential surface of the rubber body at the other end has a portion near the one end which is tapered toward the one end.

Preferably, a pair of the protrusions are formed to face each other on the inner circumferential surface of the rubber body; and, in the cross-sectional view perpendicular to the axial direction of the rubber body, each outline of circumferential regions of the rubber body corresponding to the pair of the protrusions has a linear shape and an outline of the rubber body has an ellipse shape.

According to the anti-vibration device of the present invention, a protrusion is provided partially in the circumferential direction of the rubber body on the inner circumferential surface at the other end of the rubber body. The protrusion abuts against the inner tube, for example, when the anti-vibration device is in a compressed state. The outer tube is arranged so as to surround a portion of the rubber body at the other end, and the protrusion extends over an axial region of the rubber body where the outer tube is arranged. As a result, when the device is used, the protrusion surrounded by the outer tube made of a rigid material operates to restrict displacement of the inner tube toward the protrusion under support with the outer tube to adequately increase the spring constant with respect to the direction corresponding to the arrangement of the protrusion and perpendicular to the axial direction of the device if desired.

The anti-vibration device has a cavity formed between the inner circumferential surface of the rubber body and the outer circumferential surface of the inner tube except a portion in which the protrusion is arranged, in particular, in between the one end and the other end, so that, when the rubber body is compressed and deformed by a load in the axial direction of the device, a majority of the rubber body can be deformed into the cavity to suppress protruding deformation of the rubber body in the lateral direction that may deteriorate durability of the rubber body. In addition, the outer tube made of rigid material circumferentially surrounds the protrusion, so that an increase of the protruding deformation of the rubber body caused by pressure from the inner tube to the protrusion is highly suppressed when the rubber body is compressed and deformed. Therefore, the anti-vibration device of the present invention can exhibit different spring characteristics with respect to directions perpendicular to the axial direction without sacrificing durability of the anti-vibration device.

The present invention applies to an anti-vibration device in which the outer tube has an annular plate and a supporting portion parallel to the axis of the inner tube extending continuously from the inner circumferential edge of the annular plate to the other end of the rubber body; the outer tube is embedded in the other end of the rubber body, such that the supporting portion is arranged only on the outer side of the protrusion provided partially in the circumferential direction of the rubber body on the inner circumferential surface of the rubber body; and, in the cross-sectional view including the outer tube and perpendicular to the axial direction of the rubber body, the outline of the cavity has an ellipse shape and the protrusion and the supporting portion are arranged along the portion of the elliptical cavity with long radius. When the protrusion abuts against the inner tube and is compressed, the supporting portion existing on the outer side of the protrusion suppresses the protruding deformation of the rubber effectively to increase spring constant with respect to the direction in which the protrusion extends. Since the supporting portion does not exist on the outer side of the area of the inner circumferential surface of the rubber body in which the protrusion does not exist, spring constant with respect to the direction in which the protrusion does not extend is sufficiently decreased. Therefore, the spring
characteristics with respect to directions perpendicular to the axial direction of the device can be more largely differentiated.

Meanwhile, while manufacturing the above anti-vibration device having the protrusion on the inner circumferential surface of the rubber body at the other end, the device is vulcanization molded in a cavity defined by closing the mold, and then removed from the mold. In this regard, the removal of the device from the mold may be difficult since the protrusion on the inner circumferential surface of the rubber body at the other end protrudes inwardly beyond the middle point of the inner circumferential surface to be so-called undercut portions. In particular, when the maximum protruding height of the protrusion is equal to or more than 1 millimeter, forcing to remove the molded device from the mold may cause cracking and fractures of the protrusion.

When the protruding height of the protrusion that is formed on the inner circumferential surface of the rubber body at the other end has a portion near the one end of the rubber body which is tapered toward the one end, even the protrusion with the maximum protruding height equal to or more than 1 millimeter as stated above can be prevented, during the removal of the device from the mold, from engaging with a bump on the inner circumferential surface of the cavity extending inwardly to the rubber body of the device arranged in the cavity to facilitate the removal of the device from the mold. This can eliminate the likelihood of any crack or fracture of the protrusion effectively while the device is removed from the mold.

When a pair of the protrusions is formed to face each other on the inner circumferential surface of the rubber body, the lateral protruding deformation of the circumferential region of the rubber body where the protrusions is provided slightly increases upon compressing and deforming the rubber body in the axial direction as compared with that of the other circumferential regions due to the volume decrease of the cavity caused by the formation of the protrusions. Accordingly, the durability of the rubber body is likely to be deteriorated due to local increase of the outward tensile stress of the rubber body in the circumferential direction. In the cross-sectional view perpendicular to the axial direction of the rubber body, when each outline of the circumferential regions of the rubber body corresponding to the pair of protrusions is preformed in a linear shape and the outline of the rubber body is preformed in an ellipse shape, the outline of the rubber body under the compressive deformation can be generally in a true circle in the horizontal cross-sectional view. Accordingly, the tensile stress on the outer circumferential surface of the rubber body under the compressive deformation can be uniform along the circumferential direction to further improve the durability of the device.

### BRIEF DESCRIPTION OF DRAWINGS

Fig. 1 shows one embodiment of the anti-vibration device according to the present invention in which (a) is a vertical cross-sectional view including the central axis of the anti-vibration device, (b) is a horizontal cross-sectional view taken along the line B-B in (a), and (c) is a horizontal cross-sectional view taken along the line A-A in (a).
Fig. 2 is a vertical cross-sectional view similar to Fig. 1(a) showing the anti-vibration device in a compressed and deformed state.
Fig. 3 is a horizontal cross-sectional view similar to Fig. 1(b) showing another arrangement of the protrusion formed on the inner circumferential surface of a rubber body.
Fig. 4 is perspective view of the outer tube removed from the anti-vibration device in Fig. 1.
Fig. 5 is a horizontal cross-sectional view taken along the line C-C in Fig. 1(a).
Fig. 6 is a partially enlarged vertical cross-sectional view of a variation of the protrusion including the central axis of the anti-vibration device.
Fig. 7 is a vertical cross-sectional view similar to Fig. 1(a) showing another embodiment of the anti-vibration device according to the present invention.
Fig. 8 shows a conventional anti-vibration device in which (a) is a vertical cross-sectional view and (b) is a horizontal cross-sectional view taken along the line b-b in (a).
Fig. 9 is a vertical cross-sectional view showing the anti-vibration device in Fig. 8 in a compressed and deformed state similar to Fig. 8(a).

### DESCRIPTION OF EMBODIMENTS

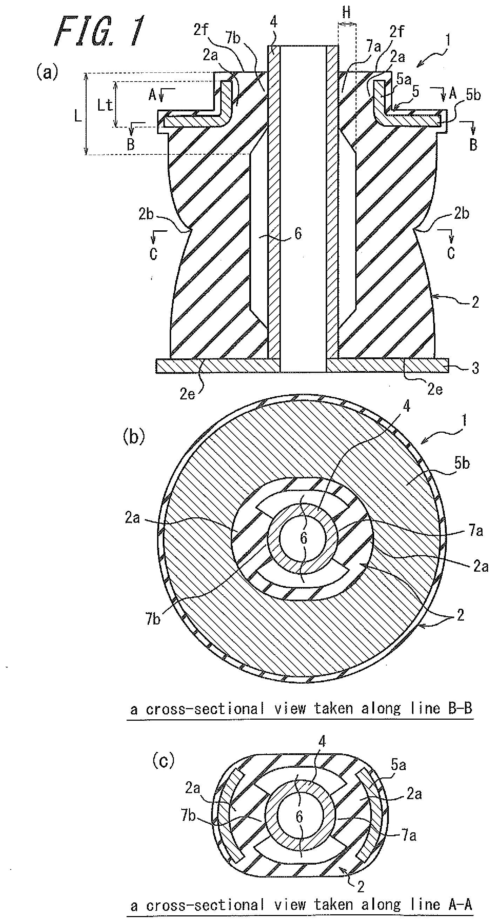

An embodiment of the present invention is described below with reference to the drawings. An anti-vibration device 1 illustrated in Fig. 1 has: a tubular rubber body 2; a support plate 3 attached to one end face at one end 2e (in Fig. 1(a), the lower end) of the rubber body 2 and made of rigid material such as metallic material, plastic material and the like; an inner tube 4 arranged in the rubber body 2 and fixed to the one end 2e of the rubber body 2 which has a smaller inner diameter than that of the rest; and an outer tube 5 embedded in the other end 2f (in Fig. 1(a), the upper end) of the rubber body 2 and made of rigid material. It is noted that, in Fig. 1, an outer tube 5 has an annular plate 5b and a vertical supporting portion 5a extending continuously from the inner circumferential edge of the annular plate 5b to the other end 2f of the rubber body 2.

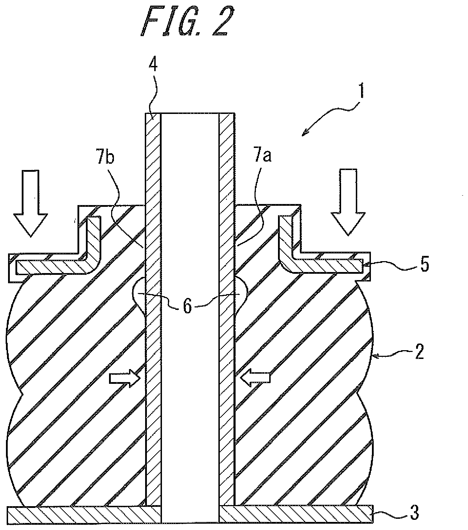

As illustrated in Fig. 1, a cavity 6 is formed between the inner circumferential surface of the rubber body 2 except an area at the one end 2e and the outer circumferential surface of the inner tube 4 over the entire circumference of the rubber body 2. Accordingly, as illustrated in Fig. 2, when an axial load is applied to the device 1 and the rubber body 2 is compressed and deformed in the axial direction, a majority of the rubber body 2 deforms into the cavity 6 to suppress the protruding deformation of the rubber body 2 in the lateral direction and thus increase of the tensile stress near the outer surface of the rubber body 2.

Meanwhile, depending on a vehicle to which the anti-vibration device 1 is installed, the device may be required to exhibit different spring characteristics with respect to directions perpendicular to the direction of central axis of the anti-vibration device, for example, the front-back direction and the lateral direction of the vehicle. In order to meet the requirement, the present embodiment is, as illustrated in Figs. 1(a), 1(b) and 1(c), provided with a pair of protrusions 7a, 7b formed on the inner circumferential surface of the rubber body 2 at the other end 2f. The protrusions 7a, 7b protrude from the inner circumferential surface of the rubber body 2 and face each other. The protrusions 7a, 7b abut against the inner tube 4 when, for example, any forces are not applied to the anti-vibration device 1 as illustrated in the figure. Both of the protrusions 7a, 7b extend in the axial direction of the rubber body 2 across the region where the outer tube 5 surrounding a portion 2a of the rubber body 2 at the other end 2f is arranged.

This allows the protrusions 7a, 7b surrounded by the outer tube 5 through the portion 2a to support the inner tube 4 elastically. Accordingly, the anti-vibration device 1 exhibits higher spring characteristics with regard to the direction in which the protrusions 7a, 7b extend, for example, the direction corresponds to the front-back direction of the vehicle (in Fig. 1(b), a horizontal direction). On the other hand, the anti-vibration device 100 exhibits lower spring characteristics with respect to the direction in which the protrusions 7a, 7b do not extend, for example, the direction corresponds to the lateral direction of the vehicle (in Fig. 1(b), a longitudinal direction). Therefore, it is possible that the spring constants of the anti-vibration device 1 with respect to two directions perpendicular to the axial direction of the anti-vibration device 1 differ from each other.

Meanwhile, when the rubber body 2 of the anti-vibration device 1 shown in Fig. 1 is compressed and deformed in the axial direction as illustrated in Fig. 2, a majority of the rubber body 2 deforms into the cavity 6 between the rubber body 2 and the inner tube 4 to suppress large protruding deformation of the rubber body 2 in the lateral direction and thus increase of the tensile stress near the outer surface of the rubber body 2 caused by the protruding deformation of the rubber body 2. Accordingly, durability of the rubber body 2 is ensured.

As long as the protrusions extend in the axial direction of the rubber body 2 across at least the region where the outer tube 5 is arranged as illustrated in Fig. 1(a), the protrusions 7a, 7b can elastically support the inner tube 4 effectively to increase the spring contact under support with the outer tube 5. In addition, the extension length L of each of the protrusions 7a, 7b in the axial direction of the rubber body 2 is equal to or less than four times the length Lt of the outer tube 5 in the axial direction of the rubber body 2 (i.e. the relationship L ≤ 4 Lt is satisfied) in order to secure a large cavity 6 between the rubber body 2 and the inner tube 4 to adequately suppress the protruding deformation of the rubber body 2 while the rubber body 2 is compressed and deformed.

The spring constant with respect to the direction perpendicular to the axial direction of the anti-vibration device 1 can be further increased by enlarging the protruding heights H of the protrusions 7a, 7b measured from the inner circumferential surface of the rubber body 2 to abut against the inner tube 4 more forcefully.

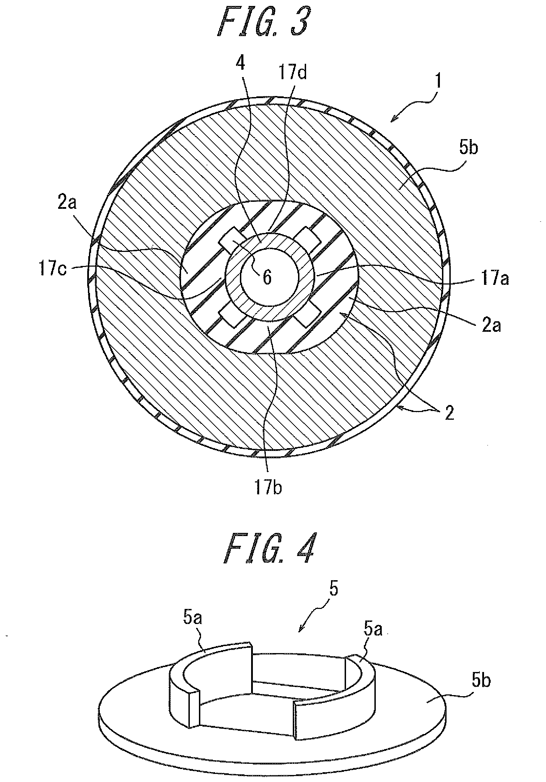

If desired, a single protrusion or more than two protrusions can be formed on the inner circumferential surface of the rubber body. For example, referring to Fig. 3, two pairs of protrusions 17a-17d are formed on the inner circumferential surface of the rubber body 2 wherein protrusions of each pair face each other. As illustrated in Fig. 3, when the pairs of the protrusions 17a-17d are arranged along directions perpendicular to each other (in the figure, a longitudinal direction and a lateral direction), sizes and/or shapes such as protruding heights, circumferential lengths and the like of the protrusions 17a-17d may differ between the respective pairs in order to exhibit different spring characteristics with regard to the directions along which the pairs of the protrusions are arranged.

Fig. 4 is a perspective view of the outer tube 5 removed from the anti-vibration device in Fig. 1. The outer tube 5 supports the protrusions 7a, 7b from their outer circumferential sides to contribute increase of the spring constant with respect to the direction in which the protrusions 7a, 7b extend. The outer tube 5 has, for example, an annular plate 5b extending in the direction perpendicular to the axial direction of the rubber body 2, and two vertical supporting portions 5a extending continuously from the inner circumferential edge of the annular plate 5b toward the other end 2f (in the figure, the upper end) of the rubber body 2 and, in this embodiment, curving in the circumferential direction of the rubber body 2. The vertical supporting portions 5a are arranged only on the outer circumferential side of the protrusions 7a, 7b and partially in the circumferential direction of the rubber body 2. In the embodiment in Fig. 1, the vertical supporting portions 5a and the protrusions 7a, 7b are arranged, in the horizontal cross-sectional view including the outer tube 5 and perpendicular to the axial direction of the rubber body 2, along the long radius of the cavity 6 having an outline in an ellipse shape. It is noted that one or more vertical supporting portions can be formed to be compatible with the arrangement and the number of the vertical supporting portions.

With the outer tube 5, the vertical supporting portions 5a support each of the protrusions 7a, 7b effectively to exhibit adequately higher spring characteristics with regard to the direction in which the protrusions 7a, 7b extend. In contrast, lower spring characteristics is exhibited in the direction in which the protrusions 7a, 7b do not extend since the vertical supporting portions 5a does not exist in this direction. Accordingly, it is possible that the spring constants with respect to different directions perpendicular to the axial direction of the device 1, such as the front-back direction and the lateral direction of the vehicle, differ more greatly. Although not illustrated, in place of the above vertical supporting portions 5a arranged partially in the circumferential direction of the rubber body 2, an outer tube having a tubular portion extending over the entire circumference of the rubber body 2 in the circumferential direction may be used.

In the device 1 illustrated in Fig. 1, a pair of protrusions 7a, 7b facing each other is formed on the inner circumferential surface of the rubber body 2. When the rubber body 2 is compressed and deformed, the protruding deformation of the areas near the protrusion 7a, 7b in a circumferential direction is slightly larger in the circumferential region where the protrusions 7a, 7b are formed than in the region where the protrusions 7a, 7b are not formed. As a result, the outline of the cylindrical rubber body 2 having a constricted portion 2b at the axial center region over the entire circumference is not a true circle under the compressed and deformed state in the cross-sectional view perpendicular to the axial direction of the rubber body 2. Accordingly, the outward tensile stress of the rubber body 2 increases locally in the circumferential direction of the rubber body 2, so that the durability of the rubber body 2 may be deteriorated.

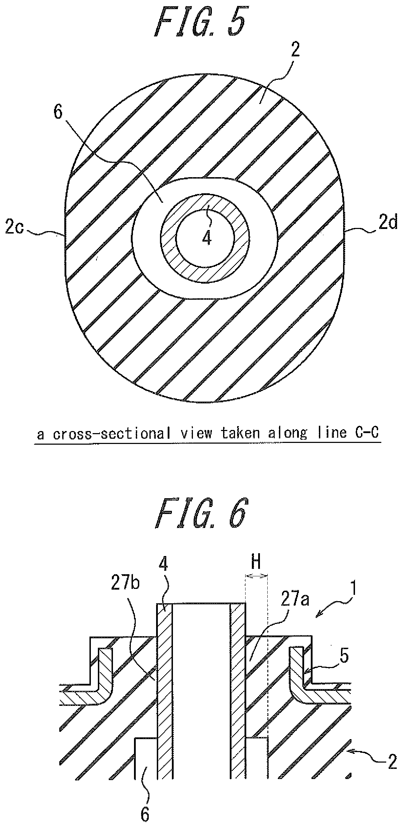

In order to suppress such local increase of tensile stress, it is preferable that, in the horizontal cross-sectional view as illustrated in Fig. 5, outlines of portions 2c, 2d of the rubber body 2 corresponding to the circumferential regions where the pair of protrusions 7a, 7b are formed have a linear shape, and the outer diameters of the rubber body measured in the direction in which the pair of the protrusions 7a, 7b extend differ from the outer diameter in other directions such that the outline of the rubber body 2 has an ellipse (in the figure, longitudinally long ellipse) shape.

It is noted that the spring constants in directions perpendicular to the axial direction of the device 1 can be finely adjusted by modifying the sizes and/or the shapes of the protrusions 7a, 7b as well as arbitrarily modifying the shape of the cavity 6 between the rubber body 2 and the inner tube 4. For example, in the device shown in Fig. 1, the outline of the cavities 6, in the horizontal cross-sectional view perpendicular to the axial direction of the rubber body 2 as illustrated in Fig. 5, has an ellipse shape in which the outside diameter of the cavity 6 in the directions in which the pair of protrusions 7a, 7b extend is larger than those in the directions in which the protrusions do not extend.

Meanwhile, while manufacturing the device stated above, the device is vulcanization molded in a cavity of a mold, and then removed from the upper side or the lower side of the open mold. In this regard, the removal of the device from the mold may be difficult since protrusions 7a, 7b at the other end protrudes inwardly beyond the middle point of the inner circumferential surface of the rubber body 2 in the axial direction to be so-called undercut portions.

When the maximum protruding heights of the protrusions are equal to or more than 1 millimeter, it is preferable that, as illustrated in Fig. 1(a), the protruding height H of the protrusion near the one ends 2e of the rubber body 2 gradually decreases toward the one ends 2e and the inner diameters of the protrusions 7a, 7b near the one ends 2e gradually increase toward the one ends 2e to form an end portion of the protrusions 7a, 7b at the one end in a tapered shape in order to suppress fractures and cracking of the protrusions caused by forcing to remove the device to allow the protrusions of the manufactured device to sufficiently exhibit the above effect of increasing the spring constant. Although not illustrated, it is noted that the tapered end portion of the protrusion can have a curved and tapered face in which the inner diameters of the portion curvedly increases toward the one end 2e.

On the other hand, when the maximum protruding heights of the protrusions are less than 1 millimeter, even if the protrusions 27a, 27b extend in the axial direction of the rubber body 2 at a constant protruding height H as illustrated in an enlargement vertical cross-sectional view in Fig. 6, the device 1 can be forced to remove from the mold without damaging the protrusions 27a, 27b.

In Fig. 1, the outer tube 5 is embedded and arranged in the other end 2f of the rubber body 2. However, the invention also includes an anti-vibration device that has no outer tube but has a member corresponding to the outer tube 5 surrounding a portion 2a of the rubber body 2 in which the protrusions 7a, 7b are formed as illustrated in Fig. 1. The member is attached firmly to the outer surface of the rubber body at the other end when the device is used.

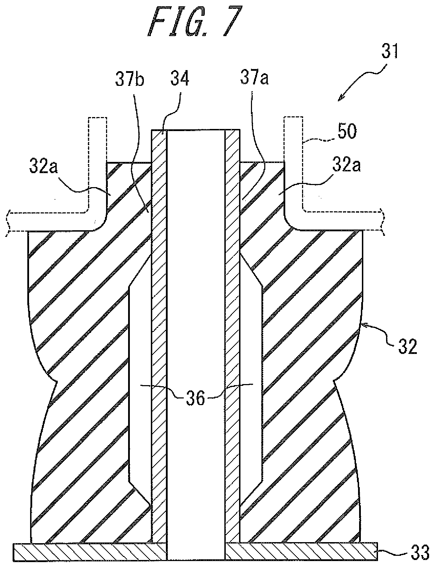

Fig. 7 illustrates an example of an anti-vibration device according to another embodiment of the present invention that has no outer tube. The device has the same feature as the anti-vibration device illustrated in Fig. 1, except that the anti-vibration device itself does not have any outer tubes at the other end (in the figure, the upper end) of the rubber body 32. When the anti-vibration device 31 is used, the outer tube 50 illustrated by dashed lines in Fig. 7 which is a member separated from the device 31 is arranged at the other end of the rubber body 32 so as to surround a portion 32a of the rubber body 32 having a smaller outer diameter. The anti-vibration device 31 also can produce the effect of increasing spring constant since the protrusions 37a, 37b supported by the outer tube 50 are compressed by the inner tube 34 abutting against the protrusions 37a, 37b. Accordingly, the anti-vibration device 31 can exhibit different spring characteristics with respect to directions perpendicular to the axial direction of the device 31. In addition, the rubber body 32 can suppress increase of the tensile stress generated at the outer surface of the rubber body 32 by deforming into the cavity 36 when the rubber body 32 is compressed and deformed.

The anti-vibration device 31 illustrated in Fig. 7 does not have an outer tube, so that it can be manufactured at lower cost and be lighter than the anti-vibration device 1 illustrated in Fig. 1. In addition, regarding manufacturing the anti-vibration device 31, the outer tube constraining the deformation of the rubber does not exist on the outer circumferential side of the protrusions 37a, 37b to facilitate the removal of a vulcanization molded device 31 from a mold.

### (Examples)

The above anti-vibration device 1 illustrated in Fig. 1 and the conventional device illustrated in Fig. 8 were prepared and tested. In the test, axial loads were applied to the anti-vibration devices multiple times to test their durability. The rubber body of the conventional device cracked on the outer surface after the load was applied 10,000 times to 20,000 times. On the other hand, the rubber body of the device illustrated in Fig. 1 did not crack after the load was applied more than ten times as many as the number of the load which was applied to the conventional device. Accordingly, the above test shows that the anti-vibration device according to the present invention can exhibit different spring characteristics with respect to different directions perpendicular to the axial direction without sacrificing durability of the anti-vibration device.

### REFERENCE SYMBOLS

- 1, 31: Anti-vibration device
- 2, 32: Rubber body
- 2a, 32a: Rubber portion
- 2b: Constricted portion
- 2c, 2d: Outline formed in a linear shape
- 2e: One end of the rubber body
- 2f: The other end of the rubber body
- 3, 33: Support plate
- 4, 34: Inner tube
- 5, 50: Outer tube
- 5a: Vertical supporting portion
- 5b: Annular plate
- 6,36: Cavity
- 7, 17, 27, 37: Protrusion
- L: Length of the protrusion in the axial direction
- Lt: Length of the outer tube in the axial direction
- H: Protruding height of the protrusion

## Claims

1. An anti-vibration device (1, 31) comprising:
a tubular rubber body (2, 32);
a support plate (3, 33) attached to an end face at one end (2e) of the tubular rubber body (2, 32); and
an inner tube (4, 34) fixedly arranged in the rubber body (2, 32) at the one end (2e) so as to form a cavity (6, 36) between the inner circumferential surface of the rubber body (2, 32) except an area at the one end (2e) and the outer circumferential surface of the inner tube (4, 34) over the entire circumference, **characterised in that**
a protrusion (7, 17, 27, 37) protruding from the inner circumferential surface of the tubular rubber body (2, 32) to abut against or be located close to the inner tube (4, 34) is provided partially in the circumferential direction of the rubber body (2, 32) on the inner circumferential surface at the other end (2f) of the rubber body (2, 32);
an outer tube (5, 50) is arranged so as to surround a portion of the rubber body (2, 32) at the other end (2f); and
the protrusion (7, 17, 27, 37) extends over an axial region of the rubber body (2, 32) where the outer tube (5, 50) is arranged.

2. The anti-vibration device (1, 31) according to claim 1, wherein the outer tube (5, 50) comprises an annular plate (5b) and a supporting portion (5a) parallel to the axis of the inner tube (4, 34) and extending continuously from an inner circumferential edge of the annular plate (5b) to the other end (2f) of the rubber body (2, 32);
the outer tube (5, 50) is embedded in the other end (2f) of the rubber body (2, 32);
the supporting portion (5a) is arranged only on an outer side of the protrusion (7, 17, 27, 37) provided partially in the circumferential direction of the rubber body (2, 32) on the inner circumferential surface of the rubber body (2, 32); and
in a cross-sectional view including the outer tube (5, 50) and perpendicular to the axial direction of the rubber body (2, 32), an outline of the cavity (6, 36) has an ellipse shape and the protrusion (7, 17, 27, 37) and the supporting portion (5a) are arranged along the portion of the elliptical cavity (6, 36) with long radius.

3. The anti-vibration device (1, 31) according to claim 1 or 2, wherein the protrusion (7, 27, 37) formed on the inner circumferential surface of the rubber body (2, 32) at the other end (2f) has a portion near the one end (2e) which is tapered toward the one end (2f).

4. The anti-vibration device (1, 31) according to any one of claims 1 to 3, wherein a pair of the protrusions (7, 17, 27, 37) are formed to face each other on the inner circumferential surface of the rubber body (2, 32); and
in the cross-sectional view perpendicular to the axial direction of the rubber body (2, 32), each outline of circumferential regions of the rubber body (2, 32) corresponding to the pair of the protrusions (7, 17, 27, 37) has a linear shape and an outline of the rubber body (2, 32) has an ellipse shape.

## Patentansprüche

1. Schwingungsdämpfungsvorrichtung (1, 31), die Folgendes umfasst:
einen röhrenförmigen Gummikörper (2, 32),
eine Stützplatte (3, 33), die an einer Stirnfläche an einem Ende (2e) des röhrenförmigen Gummikörpers (2, 32) befestigt ist, und
eine innere Röhre (4, 34), die an dem einen Ende (2e) unbeweglich in dem Gummikörper (2, 32) angeordnet ist, so dass einen Hohlraum (6, 36) zwischen der Innenumfangsfläche des Gummikörpers (2, 32) mit Ausnahme einer Fläche an dem einen Ende (2e) und der Außenumfangsfläche der inneren Röhre (4, 34) über den gesamten Umfang gebildet wird, **dadurch gekennzeichnet, dass**
ein Vorsprung (7, 17, 27, 37), der von der Innenumfangsfläche des röhrenförmigen Gummikörpers (2, 32) vorspringt, um an die innere Röhre (4, 34) anzustoßen oder nahe derselben angeordnet zu sein, teilweise in der Umfangsrichtung des Gummikörpers (2, 32) auf der Innenumfangsfläche an dem anderen Ende (2f) des Gummikörpers (2, 32) bereitgestellt wird,
eine äußere Röhre (5, 50) so angeordnet ist, dass sie einen Abschnitt des Gummikörpers (2, 32) an dem anderen Ende (2f) umgibt, und
sich der Vorsprung (7, 17, 27, 37) über einen axialen Bereich des Gummikörpers (2, 32) erstreckt, wo die äußere Röhre (5, 50) angeordnet ist.

2. Schwingungsdämpfungsvorrichtung (1, 31) nach Anspruch 1, wobei die äußere Röhre (5, 50) eine ringförmige Platte (5b) und einen Stützabschnitt (5a) parallel zu der Achse der inneren Röhre (4, 34) und der sich durchgehend von einer Innenumfangskante der ringförmigen Platte (5b) bis zu dem anderen Ende (2f) des Gummikörpers (2, 32) erstreckt, umfasst,
wobei die äußere Röhre (5, 50) in dem anderen Ende (2f) des Gummikörpers (2, 32) eingebettet ist,
wobei der Stützabschnitt (5a) nur auf einer äußeren Seite des Vorsprungs (7, 17, 27, 37) angeordnet ist, der teilweise in der Umfangsrichtung des Gummikörpers (2, 32) auf der Innenumfangsfläche des Gummikörpers (2, 32) bereitgestellt wird, und
wobei in einer Querschnittsansicht, welche die äußere Röhre (5, 50) einschließt und senkrecht zu der Axialrichtung des Gummikörpers (2, 32) ist, ein Umriss des Hohlraums (6, 36) eine Ellipsenform aufweist und der Vorsprung (7, 17, 27, 37) und der Stützabschnitt (5a) entlang des Abschnitts des elliptischen Hohlraums (6, 36) mit langem Radius angeordnet sind.

3. Schwingungsdämpfungsvorrichtung (1, 31) nach Anspruch 1 oder 2, wobei der Vorsprung (7, 17, 27, 37), der auf der Innenumfangsfläche des Gummikörpers (2, 32) an dem anderen Ende (2f) geformt ist, einen Abschnitt nahe dem einen Ende (2e) aufweist, der zu dem anderen Ende (2f) hin verjüngt ist.

4. Schwingungsdämpfungsvorrichtung (1, 31) nach einem der Ansprüche 1 bis 3, wobei ein Paar von Vorsprüngen (7, 17, 27, 37) so geformt ist, dass sie einander auf der Innenumfangsfläche des Gummikörpers (2, 32) gegenüberliegen, und
in der Querschnittsansicht, senkrecht zu der Axialrichtung des Gummikörpers (2, 32), jeder Umriss von Umfangsbereichen des Gummikörpers (2, 32), die dem Paar von Vorsprüngen (7, 17, 27, 37) entsprechen, eine lineare Form aufweist und ein Umriss des Gummikörpers (2, 32) eine Ellipsenform aufweist.

## Revendications

1. Dispositif antivibratoire (1, 31), comprenant :
un corps tubulaire en caoutchouc (2, 32) ;
une plaque de support (3, 33) fixée sur une face d'extrémité au niveau d'une extrémité (2e) du corps tubulaire en caoutchouc (2, 32) ; et
un tube interne (4, 34) agencé fermement dans le corps en caoutchouc (2, 32) au niveau de ladite une extrémité (2e), de sorte à former une cavité (6, 36) entre la surface circonférentielle interne du corps en caoutchouc (2, 32), à l'exception d'une zone au niveau de ladite une extrémité (2e) et de la surface circonférentielle externe du tube interne (4, 43), au-delà de l'ensemble de la circonférence ; **caractérisé en ce que** :
une saillie (7, 17, 27, 37) débordant de la surface circonférentielle interne du corps tubulaire en caoutchouc (2, 32) pour buter contre le tube interne (4, 34) ou être positionnée près de celui-ci, est formée partiellement dans la direction circonférentielle du corps en caoutchouc (2, 32) sur la surface circonférentielle interne au niveau de l'autre extrémité (2f) du corps en caoutchouc (2, 32) ;
un tube externe (5, 50) est agencé de sorte à entourer une partie du corps en caoutchouc (2, 32) au niveau de l'autre extrémité (2f) ; et
la saillie (7, 17, 27, 37) s'étend au-delà d'une région axiale du corps en caoutchouc (2, 32) où est agencé le tube externe (5, 50).

2. Dispositif antivibratoire (1, 31) selon la revendication 1, dans lequel le tube externe (5, 50) comprend une plaque annulaire (5b) et une partie de support (5a) parallèle à l'axe du tube interne (4, 34) et s'étend en continu d'un bord circonférentiel interne de la plaque annulaire (5b) vers l'autre extrémité (2f) du corps en caoutchouc (2, 32) ;
le tube externe (5, 50) est encastré dans l'autre extrémité (2f) du corps en caoutchouc (2, 32) ;
la partie de support (5a) est agencée uniquement sur un côté externe de la saillie (7, 17, 27, 37), disposée partiellement dans la direction circonférentielle du corps en caoutchouc (2, 32), sur la surface circonférentielle interne du corps en caoutchouc (2, 32) ; et
dans une vue en section transversale, incluant le tube externe (5, 50) et perpendiculaire à la direction axiale du corps en caoutchouc (2, 32), un tracé de la cavité (6, 36) a une forme en ellipse, la saillie (7, 17, 27, 37) et la partie de support (5a) étant agencées le long de la partie de la cavité en ellipse (6, 36) avec un rayon long.

3. Dispositif antivibratoire (1, 31) selon les revendications 1 ou 2, dans lequel la saillie (7, 17, 27, 37) formée sur la surface circonférentielle interne du corps en caoutchouc (2, 32) au niveau de l'autre extrémité (2f) comporte une partie proche de ladite une extrémité (2e) qui est effilée en direction de l'autre extrémité (2f).

4. Dispositif antivibratoire (1, 31) selon l'une quelconque des revendications 1 à 3, dans lequel une paire de saillies (7, 17, 27, 37) est formée de sorte à se faire face sur la surface circonférentielle interne du corps en caoutchouc (2, 32) ; et
dans la vue en section transversale perpendiculaire à la direction axiale du corps en caoutchouc (2, 32), chaque tracé de régions circonférentielles du corps en caoutchouc (2, 32) correspondant à la paire de saillies (7, 17, 27, 37) a une forme linéaire et un tracé du corps en caoutchouc (2, 32) a une forme en ellipse.
